# EUROPEAN PATENT SPECIFICATION

(11) **EP 1 281 446 B1**
(45) Date of publication and mention of the grant of the patent: **24.06.2009**
(21) Application number: 02077739.7
(22) Date of filing: 08.07.2002
(51) Int. Cl.: B08B 9/20, B08B 9/08, G01N 27/07

(54) **Measuring device for monitoring the cleaning of containers in a washing installation**
Messvorrichtung zum Überwachen der Reinigung von Behältern in einer Waschanlage
Dispositif de mesure pour surveiller le nettoyage de conteneurs dans une installation de lavage

(30) Priority: 03.08.2001 NL 1018707
(43) Date of publication of application: 05.02.2003
(73) Proprietor: Haffmans B.V., 5928 PW Venlo (NL)
(72) Inventor: Geelen, Eric Henricus Christian, 5931 CZ Tegelen (NL); Holterman, Menno Martijn, 5911 BG Venlo (NL); Martynowicz, Emile Thomas Martinus Johannes, 5925 HJ Venlo (NL)
(74) Representative: Valkonet, Rutger

(56) References cited:
- WO-A-93/13880
- DE-A- 1 607 956
- DE-A- 19 846 322
- DE-B- 1 107 428
- US-A- 3 769 932
- US-A- 3 917 450

## Description

The invention relates to a measuring device for monitoring the cleaning of containers being passed through a washing installation according to the preamble of claim 1.

The term container as used herein is understood to include all kinds of cleanable containers having different shapes, such as bottles.

At present bottles, for example beer bottles or bottles for dairy products or soft drinks, are collected via return systems and returned to the bottling plants, where they are cleaned and refilled with the foodstuff or the beverage in question. Such a return system, in which the consumer is stimulated by means of a deposit system to return empty bottles for reuse, for example to supermarkets, already exists for glass bottles for beer and dairy products, as well as for the well-known PET soft drink bottles, which are made of plastic material.

For reasons of hygiene, new containers must be cleaned thoroughly before being filled with the foodstuff in question for the first time, irrespective of the fact whether or not they are intended for single use, for example for packaging sweets. Also in the case of collected bottles which have been used already and which are to be filled again for reuse, thorough cleaning prior to refilling is highly desirable.

To this end, the containers intended for single use or the used and collected containers are subjected to a so-called washing programme in a washing installation. Such a washing installation consists of a transport line, in which the containers or bottles are successively subjected to all kinds of washing baths, neutralisation baths and treatment with spray nozzles, using different temperatures, cleaning agents or cleaning lyes, etc.

An example of such washing installation is disclosed in the International patent application no. PCT/GB93/00089, publication no. WO93/13880. In order to monitor the washing programme, a so-called dummy container as referred to in the introduction is subjected to the washing programme simultaneously with the bottles or containers to be cleaned. The dummy container is usually made of plastic material and has substantially the same shape and dimensions as the bottle or container to be cleaned, so as to simulate the washing conditions of a "regular" bottle or container as closely as possible. A known dummy container is fitted with a temperature sensor, which is read after completion of the washing programme. Thus an indication can be obtained as regards the operating temperature of the washing or rinsing water during the washing programme, and in particular it can be verified whether the operating temperature was high enough to ensure an adequate bacteriological cleaning of the bottle or container.

An example of such dummy container is disclosed in the German patent application no. 1107428. However, the current dummy container is not capable of indicating yet whether the successive washing baths clean the bottles effectively enough, i.e. whether the bottles are sufficiently clean upon exiting the washing installation. It is not possible with the current dummy container to trace the presence of any residue of cleaning agents (lyes) and/or impurities in the water, especially of any residual water in the dummy container. In order to overcome this drawback, the measuring device according to the invention is characterized according to the characterizing features of claim 1.

Said substances may be the various cleaning lyes that are used in the washing installation, for example, or all kinds of food residue, such as sugars from soft drinks, or remnants of glue and labels. Furthermore, said substances may be desirable or undesirable substances: the presence of food residue and remnants of glue and labels in the cleaning water is by definition undesirable; in certain washing baths, however, the presence of cleaning lye in the washing water, and more in particular the degree of the presence thereof, is indispensable. On the other hand, the presence of cleaning lyes in the rinsing water and in the cleaned bottles at the end of the washing programme is not desirable.

A good indication of the degree of cleanness of the bottles upon leaving the washing installation can be obtained by determining the presence of all kinds of substances in the cleaning water (washing and/or rinsing water),

More in particular, said means are capable of determining a concentration of substances that are present. This embodiment is very suitable for determining the concentration of cleaning lye in each washing baths, and in particular it is very suitable for determining whether there are still cleaning lyes present in the rinsing water and in the cleaned bottles.

In a specific embodiment, said means are arranged near the neck of the dummy container. Furthermore it is possible for said means to be arranged near, on or in the bottom of the dummy container, in which said means may be arranged inside the dummy container.

In a specific embodiment, said means comprise at least one pH-sensor for a very effective determination of the presence of particular substances, for example the presence or the concentration of (usually base) cleaning lyes in the washing water or the presence of residue of (usually acidic) fruit juices.

More in particular, the two electrodes are formed as concentrical, circular electrodes, with the temperature sensor being disposed in the inner electrode. The measured electric conductivity of the washing water can be directly corrected for the prevailing temperature in that case, so that a more reliable measurement is obtained.

In order to be able to determine the effectiveness of the washing programme, said means may comprise a pressure sensor for measuring the pressure of the water jet from the spray nozzles.

A fully automated and autonomous measurement of the presence of substances in the cleaning water can be obtained in that, in one embodiment of the measuring device according to the invention, said means furthermore comprise measuring and control electronics for measuring the required data in use and establishing the presence and/or the concentration of said substances in the cleaning water on the basis thereof.

In a more specific embodiment, the dummy container comprises a double bottom for housing the measuring and control electronics. The double bottom may be fitted with connecting contacts, for example for charging a battery that is present in the double bottom and for reading the measurement data that have been obtained in use after completion of the washing programme. The dummy container may comprise means for wireless transmission of the measuring data that have been obtained in use.

The invention will now be explained in more detail with reference to the drawing, in which:
Figure 1 is a schematic representation of a bottle washing installation;
Figure 2a shows an embodiment of a measuring device according to the invention in the form of a dummy container;
Figure 2b is a top plan view of the dummy container of Figure 2a.

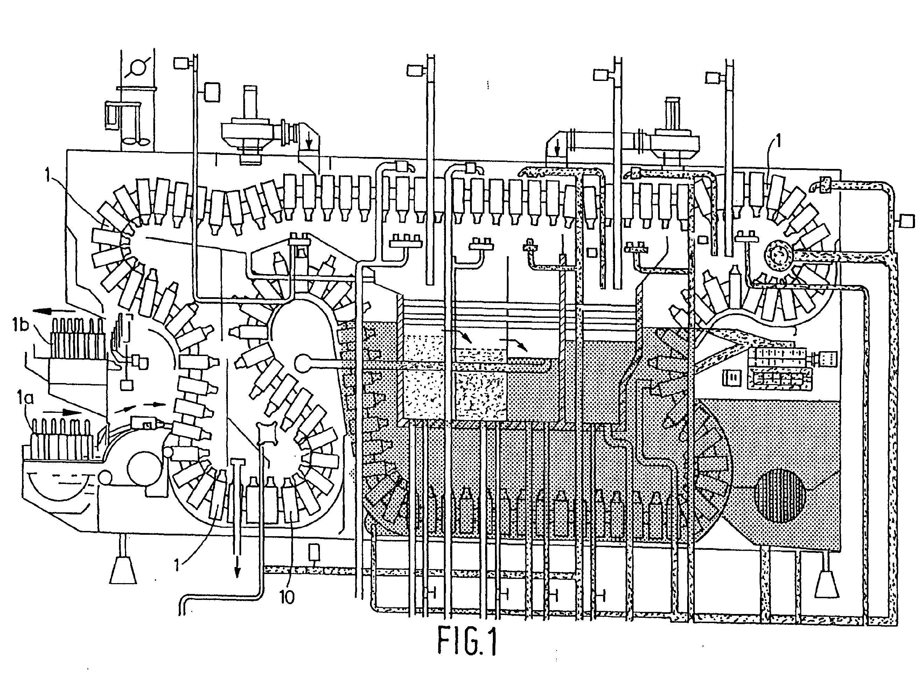

The washing installation, for example for beer bottles 10, that is shown in Figure 1 can be used for cleaning bottles that have been collected via a return system. On the other hand, such a washing installation is also used for cleaning new bottles or containers, whether or not intended for single use, just before they are first filled with a foodstuff or other perishable product.

The washing installation is made up of transport line 1 comprising an entry side 1a and an exit side 1b. The transport line 1 for the bottles 10 passes through a number of different, successive washing baths, in which different washing conditions prevail as regards the temperature, the amount of washing and/or rinsing water, the cleaning agent that is used, etc. The transport line 1 consists of a transport element on which the bottles can be clamped down or otherwise be placed. Usually, the bottles are first subjected to a rinsing bath upon entry into the washing installation so as to remove the first impurities, among which loose matter such as labels. Then the bottle is subjected to a number of immersion baths (the dark hatched part in Figure 1), in which the temperature of the water as well as the amount of cleaning agent and/or cleaning lye varies and in which the labels are soaked off.

After having passed through these cleaning baths, the bottles are subjected to a number of rinsing baths, where the bottles, hanging in upside-down position, are rinsed from below by means of a number of spray nozzles extending to within the bottles. After these rinsing baths, the cleaned bottle is removed from the transport line 1 and moved out via the exit 1b so as to be subjected to further treatment steps. In this connection, a further inspection for visible impurities or possible damage to the bottle may be considered, followed by the filling of the bottle with the liquid foodstuff in question, the affixation of a label and further storage and transport.

Generally, the temperature in the various washing baths varies between 20°C and 90°C, and the concentration of lye generally varies between 0% and 3%. Each bottle is heated, soaked with lye, sprayed with decreasing lye concentrations and finally rinsed out with clean rinsing water.

Currently, a dummy contain er is used for gaining an accurate insight into the washing conditions in the washing installation, the shape of which dummy container is practically identical to that of the bottle that is being cleaned in the washing installation. The known dummy container or dummy bottle is fitted with a temperature sensor in that case, which measures and stores the respective temperatures of the various washing baths and which is read after having completed the washing programme.

It is not possible with th e known dummy containers, however, to monitor the presence or the concentration of all kinds of desirable or undesirable substances in the washing/or rinsing water that is used, which desirable or undesirable substances provide an indication as to the effectiveness of the cleaning process of the bottles, in particular as regards the question whether the containers or bottles are sufficiently clean upon leaving the washing installation.

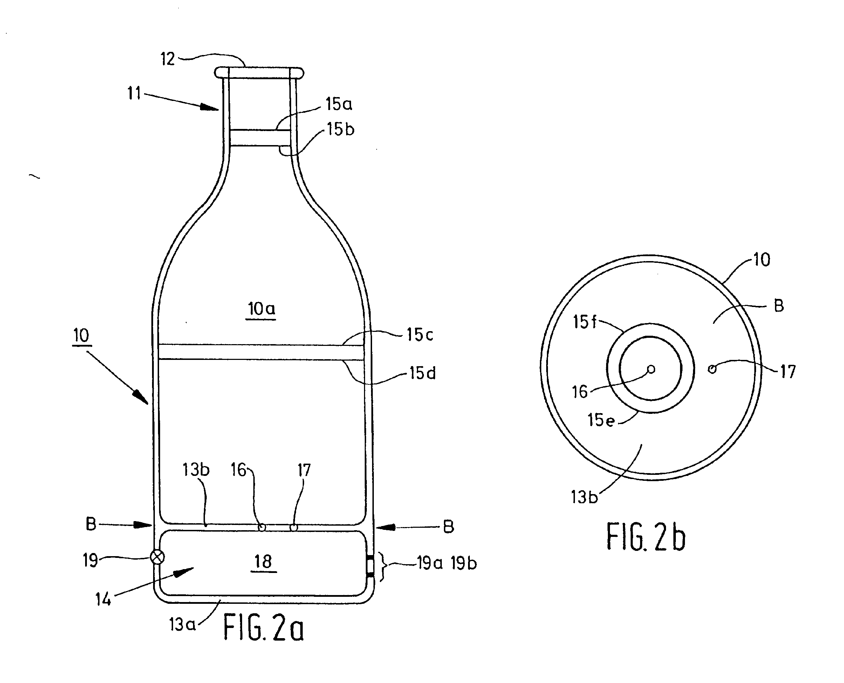

Figures 2a and 2b show an embodiment of a measuring device for monitoring the cleaning of bottles. The embodiment that is shown therein is in the form of a dummy bottle 10, a beer bottle in this case. The dummy bottle 10 has a neck 11 and an opening 12. Similarly to an regular beer bottle, the inner side 10a of the bottle 10 is open. Similarly to the existing dummy containers, the bottle is fitted with the temperature sensor 16, which is arranged on the inner side 10a of the bottle 10 in this embodiment. This sensor makes it possible to measure the temperatures of the various washing baths during the passage of the dummy bottle through the washing installation.

In accordance with the invention, the dummy bottle 10 furthermore comprises means which determine the presence of all kinds of substances in the cleaning water (washing and/or rinsing water). Said means, in the form of at least two spaced-apart electrodes, which are preferably arranged near the neck 11, actually measure the electric conductivity of the washing water. In this embodiment, the electrodes 15a and 15b are arranged around the neck 11 on the inner side. In another embodiment, the two electrodes 15c and 15d are arranged around the belly of the dummy bottle on the inner side 10a. According to another possibility, however, one or more pairs of electrodes are arranged on the outside of the dummy bottle 10.

During the washing programme in the washing installation, the means 15a, 15b and 15c, 15d measure the conductivity of the washing and/or rinsing water during the various washing baths. Thus it is possible not only to determine whether impurities (for example glue or food residue, etc.) are still present in the rinsing water, but also the presence or the concentration of any cleaning agents or cleaning lyes (NaOH and KOH) in the washing and rinsing water can be analysed in a simple manner. In particular the analysis of the washing and/or rinsing water for the presence of the so-called cleaning lyes results in a percentage or concentration of residual lye in the washing and/or rinsing water, which value can be used at a later stage for making adjustments as regards the use of cleaning agents and in particular the amount thereof. It is desirable to use the lowest possible (preferably zero) concentration of cleaning agent, especially in the rinsing water, so as to obtain a maximum degree of cleanness upon refilling of the bottles with the foodstuff in question.

In another embodiment, which is shown in Figure 2b, the electrodes which measure the conductivity of the washing and/or rinsing water, are fitted in the bottom B of the bottle 10. The two electrodes 15e and 15f are arranged in the bottom 13b as concentrical circles. The electrodes are in particular suitable for measuring the conductivity of any residual water in the bottle during the washing and/or rinsing treatments.

The temperature sensor 16 is disposed in the centre of the two concentrical electrodes 15e and 15f in that case, and the sensor is used for correcting the measurement of the electric conductivity for temperature. On the other hand, the bottle 10 may also comprise a pressure sensor 17 arranged in the bottom, by means of which the water jet pressure of the spray nozzles of the washing installation, and thus the effectiveness of the cleaning operation, can be measured.

In accordance with the invention, the dummy bottle 10 furthermore comprises a double bottom 13a, 13b, between which a space 18 is present. Said space 18 houses the measuring and control electronics for measuring the required data in use and establishing the presence and/or concentration of the substances in the cleaning water on the basis thereof. Each sensor 15a, 15b, 15c, 15d as well as the temperature sensor 16 and the pressure sensor 17 are connected to said measuring and control electronics via the wall of the dummy bottle 10, and thus the signals delivered by said sensors can be stored and subsequently, after completion of the washing programme, be suitably read for further processing and analysis. To this end, the bottle 10 is fitted with a number of connecting contacts 19a and 19b, by means of which the dummy bottle 10 can be connected to suitable reading apparatus (for example via a "craddle" with a computer) for transmitting the measuring data collected during the washing programme.

The measuring data may be transmitted wirelessly online via a transmission device, so that it is possible to make adjustments to the washing programme while the dummy bottle is passing through the washing installation, for example by adjusting the rate of movement, so that the time of passage of the bottles in a particular washing bath or the duration of the rinsing process is extended. Furthermore, the amount of cleaning lye in a washing bath may be adjusted if it appears that the concentration of said lye as measured by the dummy bottle is no longer within the predetermined values.

In addition to that, the dummy bottle may be connected, by means of the aforesaid or other connecting contacts, to a charging device for charging the battery that is present in the space 18. Said battery functions to supply power to the measuring and control electronics during the passage of the dummy bottle through the washing installation.

On the other hand, the dummy bottle may be provided with an indicator, for example one or more LED's (19), which provide a visual indication as regards the presence of the concentration of desirable or undesirable substances in the cleaning water and/or the measuring time and/or the temperature and/or the pressure as established by the measuring and control electronics during the washing programme in the washing installation. If the measured values as regards concentration, temperature, time, pressure etc. are within predetermined bounds, an LED may light up green, for example. If, on the other hand, the measured values are outside the predetermined bounds, this can be visualised by having the LED in question light up red, for example, and possibly blink. The signal may also be an acoustic signal.

The determination of the degree of contamination of the washing and/or rinsing water by the measuring and control electronics on the basis of the signals delivered by the various sensors can be set in advance by programming or adjusting the measuring and control electronics via the connecting contacts 19a and 19b, using suitable equipment, prior to the passage through the washing installation.

In addition to that, said means may comprise a pH-sensor for determining the presence of (base) cleaning agents and/or (acidic) food residue in the washing and/or rinsing water.

It will be apparent that the use of a dummy bottle according to the invention will result in a better analysis of the washing and/or rinsing water used in a washing installation. If the degree of contamination of the washing and/or rinsing water exceeds a predetermined value, this may be a reason to exchange the washing and/or rinsing water. On the other hand, it can easily be verified in this manner whether the amount of the cleaning lye that is used is sufficient to ensure an effective cleaning process of the bottles.

## Claims

1. A measuring device for monitoring the cleaning of containers being passed through a washing installation (1), in which the measuring device is in the form of a dummy container (10) fitted with a temperature sensor (16), which dummy container, together with the containers (1a-1b) to be cleaned with cleaning water, can be passed through the washing installation, wherein the dummy container comprises means which, in use, determine the presence of all kinds of substances in the cleaning water, said means comprise at least two spaced-apart electrodes (15a-15b; 15c-15d; 15e-15f), **characterized in that** one electrode is arranged around the other electrode in the form of a circle.

2. A measuring device according to claim 1, **characterized in that** the two electrodes are formed as concentrical, circular electrodes, with the temperature sensor (16) being disposed in the inner electrode.

3. A measuring device according to claim 1 or 2, **characterized in that** said means determine a concentration of substances that are present.

4. A measuring device according to any one or more of the preceding claims, **characterized in that** said means are arranged near the neck (11) of the dummy container (10).

5. A measuring device according to any one or more of the preceding claims, **characterized in that** said means are arranged near, on or in the bottom (13b) of the dummy container.

6. A measuring device according to any one or more of the preceding claims, **characterized in that** said means are arranged inside the dummy container.

7. A measuring device according to any one or more of the preceding claims, **characterized in that** said means comprise at least one pH-sensor.

8. A measuring device according to any one or more of the preceding claims, **characterized in that** said means measure the electric conductivity of the washing water.

9. A measuring device according to any one or more of the preceding claims, **characterized in that** said means comprise at least one pressure sensor (17).

10. A measuring device according to any one or more of the preceding claims, **characterized in that** said means furthermore comprise measuring and control electronics for measuring the required data in use and establishing the presence and/or the concentration of said substances in the cleaning water on the basis thereof.

11. A measuring device according to claim 10, **characterized in that** the dummy container comprises a double bottom (13a-13b; 18) for housing the measuring and control electronics.

12. A measuring device according to claim 11, **characterized in that** the double bottom is fitted with connecting contacts (19a-19b), for example for charging a battery that is present in said space and for reading the measurement data that have been obtained in use.

13. A measuring device according to claim 11, **characterized in that** the dummy container comprises means for wireless transmission of the measuring data that have been obtained in use.

## Patentansprüche

1. Messvorrichtung zum Überwachen der Reinigung von Behältern, die durch einen Waschaufbau (1) geführt werden, bei der die Messvorrichtung die Form eines Testbehälters (10) aufweist, an dem ein Temperatursensor (16) montiert ist, wobei der Testbehälter, zusammen mit den anderen Behältern (1a-1b), die mit Reinigungswasser gereinigt werden, durch den Waschaufbau hindurchgeführt werden kann, wobei der Testbehälter Mittel umfasst, die im Gebrauch das Vorhandensein von jeder Art Substanz in dem Reinigungswasser ermitteln, wobei die Mittel zumindest zwei beabstandete Elektroden (15a-15b; 15c-15d; 15e-15f) umfassen,
**dadurch gekennzeichnet, dass**
eine Elektrode in Kreisform um die andere Elektrode angeordnet ist.

2. Messvorrichtung nach Anspruch 1, **dadurch gekennzeichnet, dass** die zwei Elektroden als konzentrische, Kreiselektroden ausgebildet sind, wobei der Temperatursensor (16) an der inneren Elektrode angeordnet ist.

3. Messvorrichtung nach Anspruch 1 oder 2, **dadurch gekennzeichnet, dass** die Mittel die Konzentration der Substanzen ermitteln, die Vorhanden sind.

4. Messvorrichtung nach einem oder mehreren der vorhergehenden Ansprüche, **dadurch gekennzeichnet, dass** die Mittel nahe dem Hals (11) des Testbehälters (10) angeordnet sind.

5. Messvorrichtung nach einem oder mehreren der vorhergehenden Ansprüche, **dadurch gekennzeichnet, dass** die Mittel nahe dem oder im Boden (13b) des Testbehälters angeordnet sind.

6. Messvorrichtung nach einem oder mehreren der vorhergehenden Ansprüche, **dadurch gekennzeichnet, dass** die Mittel innerhalb des Testbehälters angeordnetsind.

7. Messvorrichtung nach einem oder mehreren der vorhergehenden Ansprüche, **dadurch gekennzeichnet, dass** die Mittel zumindest einen pH-Sensor umfassen.

8. Messvorrichtung nach einem oder mehreren der vorhergehenden Ansprüche, **dadurch gekennzeichnet, dass** die Mittel die elektrische Leitfähigkeit des Waschwassers messen.

9. Messvorrichtung nach einem oder mehreren der vorhergehenden Ansprüche, **dadurch gekennzeichnet, dass** die Mittel zumindest einen Drucksensor (17) umfassen.

10. Messvorrichtung nach einem oder mehreren der vorhergehenden Ansprüche, **dadurch gekennzeichnet, dass** die Mittel ferner Mess- und Steuerelektronik umfassen, zum Messen der benötigten Daten im Gebrauch und zum Feststellen des Vorhandenseins und/oder der Konzentration der Substanzen im Reinigungswasser auf Grundlage dessen.

11. Messvorrichtung nach Anspruch 10, **dadurch gekennzeichnet, dass** der Testbehälter einen doppelten Boden (13a-13b; 18) zum Aufnehmen der Mess- und Steuerelektronik umfasst.

12. Messvorrichtung nach Anspruch 11, **dadurch gekennzeichnet, dass** der doppelte Boden mit Verbindungskontakten (19a-19b) versehen ist, beispielsweise zum Laden einer Batterie die in dem Raum vorhanden ist und zum Lesen der Messdaten, die im Gebrauch erhalten wurden.

13. Messvorrichtung nach Anspruch 11, **dadurch gekennzeichnet, dass** der Testbehälter Mittel zur drahtlosen Übertragung der Messdaten umfasst, die im Gebrauch erhalten wurden.

## Revendications

1. Appareil de mesure permettant de surveiller le nettoyage de conteneurs qui traversent une installation de lavage (1), dans lequel le dispositif de mesure a la forme d'un faux conteneur (10) muni d'un détecteur de température (16), lequel faux conteneur, en même temps que les conteneurs (1a - 1b) qui doivent être nettoyés avec de l'eau de nettoyage, peut traverser l'installation de lavage, dans laquelle le faux conteneur comprend des moyens qui, pendant l'utilisation, déterminent la présence de toute sorte de substances dans l'eau de nettoyage, lesdits moyens comprenant au moins deux électrodes (15a - 15b ; 15c - 15d ; 15e - 15f) espacées l'une de l'autre, **caractérisé en ce qu'**une électrode est agencée autour de l'autre électrode sous la forme d'un cercle.

2. Dispositif de mesure selon la revendication 1, **caractérisé en ce que** les deux électrodes ont la forme d'électrodes circulaires concentriques, le détecteur de température (16) étant disposé dans l'électrode interne.

3. Dispositif de mesure selon la revendication 1 ou 2, **caractérisé en ce que** lesdits moyens déterminent une concentration de substances qui sont présentes.

4. Dispositif de mesure selon l'une ou plusieurs des revendications précédentes, **caractérisé en ce que** lesdits moyens sont agencés près du col (11) du faux conteneur (10).

5. Dispositif de mesure selon l'une ou plusieurs des revendications précédentes, **caractérisé en ce que** lesdits moyens sont agencés près de, sur ou dans le fond (13b) du faux conteneur.

6. Dispositif de mesure selon l'une ou plusieurs des revendications précédentes, **caractérisé en ce que** lesdits moyens sont agencés à l'intérieur du faux conteneur.

7. Dispositif de mesure selon l'une ou plusieurs des revendications précédentes, **caractérisé en ce que** lesdits moyens comprennent au moins un détecteur de pH.

8. Dispositif de mesure selon l'une ou plusieurs des revendications précédentes, **caractérisé en ce que** lesdits moyens mesurent la conductivité électrique de l'eau de nettoyage.

9. Dispositif de mesure selon l'une ou plusieurs des revendications précédentes, **caractérisé en ce que** lesdits moyens comprennent au moins un détecteur de pression (17).

10. Dispositif de mesure selon l'une ou plusieurs des revendications précédentes, **caractérisé en ce que** lesdits moyens comprennent en outre un matériel électronique de mesure et de commande permettant de mesurer les données requises pendant l'utilisation et d'établir la présence et/ou la concentration desdites substances dans l'eau de nettoyage par rapport à celle-ci.

11. Dispositif de mesure selon la revendication 10, **caractérisé en ce que** le faux conteneur comprend un double fond (13a - 13b ; 18) permettant d'abriter le matériel électronique de mesure et de commande.

12. Dispositif de mesure selon la revendication 11, **caractérisé en ce que** le double fond est muni de contacts de connexion (19a - 19b), par exemple pour charger une batterie qui est présente dans ledit espace et pour lire les données de mesure qui ont été obtenues pendant l'utilisation.

13. Dispositif de mesure selon la revendication 11, **caractérisé en ce que** le faux conteneur comprend des moyens permettant la transmission sans fil des données de mesure qui ont été obtenues pendant l'utilisation.
